# EUROPÄISCHE PATENTSCHRIFT

(11) **EP 2 603 395 B1**
(45) Veröffentlichungstag und Bekanntmachung des Hinweises auf die Patenterteilung: **11.06.2014**
(21) Anmeldenummer: 11744010.7
(22) Anmeldetag: 12.08.2011
(51) Int. Cl.: B60N 2/58, B60N 2/60, B60N 2/28

(54) **EINSATZ FÜR POLSTERAUSNEHMUNG UND FAHRZEUGSITZ**
INSERT FOR RECESS IN UPHOLSTERY AND VEHICLE SEAT
INSERT DESTINÉ À UN ÉVIDEMENT DE COUSSIN ET SIÈGE DE VÉHICULE

(30) Priorität: 14.04.2011 DE 102011002045; 13.08.2010 DE 102010034273
(43) Veröffentlichungstag der Anmeldung: 19.06.2013
(73) Patentinhaber: Johnson Controls GmbH, 51399 Burscheid (DE)
(72) Erfinder: MANTKE, Jörg, 51381 Leverkusen (DE); DUBEC, Peter, 91305 Melice-Lieskove (SK)
(74) Vertreter: Finger, Catrin
(86) Internationale Anmeldenummer: PCT/EP2011/063935
(87) Internationale Veröffentlichungsnummer: WO 2012/020125

(56) Entgegenhaltungen:
- EP-A1- 1 215 077
- US-A- 5 588 189
- US-A1- 2010 186 201
- US-B1- 6 601 917
- US-B1- 7 093 331

## Beschreibung

Die Erfindung betrifft ein Abdeckelement für eine Polsterausnehmung eines Fahrzeugsitzes gemäß dem Oberbegriff des Anspruchs 1. Weiterhin betrifft die Erfindung einen Fahrzeugsitz mit einer Polsterausnehmung gemäß dem Oberbegriff des Anspruchs 7.

### Stand der Technik

Aus der Praxis sind gattungsgemäße Einsätze und Fahrzeugsitze bekannt.

Die DE 200 15 161 U1 betrifft einen Kraftfahrzeugsitz mit einer Haltevorrichtung für eine lösbare Verbindung eines Gegenstandes, insbesondere Kindersitzes, wobei die Haltevorrichtung starr mit dem Sitzteilrahmen verbunden, bei Nichtgebrauch durch ein zum Sitz gehörendes Polsterteil abdeckbar und in dem durch die Rückenlehne abgedeckten Bereich am Sitzteilrahmen befestigt ist, wobei die Haltevorrichtung durch eine den unteren Bereich der Rückenlehnenpolsterung bildende Polsterklappe abgedeckt ist, die zum Zugänglichmachen der Halterung um eine Schwenkachse nach oben klappbar ist, wobei die Rückenlehne und die Polsterklappe durchgehend mit einem einteiligen Bezug bezogen sind, und die Schwenkachse im Bezug der Rückenlehne ausgebildet ist, der zur Bildung der Schwenkachse linienförmig relativ zum Polsterteil der Rückenlehne festgelegt ist.

Die US 2007/0176476 A1 betrifft eine Sitzanordnung für ein Fahrzeug.

Die DE 198 34 861 C1 beschreibt einen Kindersitz, insbesondere für Kraftfahrzeuge, welcher mit einem Oberbau und einem Unterbau mittels einer Befestigungsvorrichtung auf einem Fahrzeugsitz anbringbar ist. Der Oberbau ist relativ zum Unterbau bewegbar und in wenigstens einer Stellung festlegbar.

Die DE 100 44 621 C1 betrifft einen Kraftfahrzeugsitz mit einer Haltevorrichtung für eine lösbare, starre Befestigung eines Gegenstandes, insbesondere Kindersitze, auf dem Kraftfahrzeugsitz, wobei die Haltevorrichtung etwa im Zwickelbereich zwischen Rückenanlagefläche und Sitzfläche des Kraftfahrzeugsitzes innerhalb der Sitzpolsterung angeordnet und bei Nichtgebrauch durch eine Abdeckung abdeckbar ist. Dabei wird die Haltevorrichtung in einem von der Polsterung umgebenen Schacht angeordnet, der sich in die Polsteroberfläche öffnet und durch eine am Schacht schwenkbar gelagerte Klappe verschließbar ist.

In der US 6,601,917 B1 (dem Oberbegriff des unabhängingen Anspruchs 1 bzw. 7 entsprechend) wird eine Sitzanordnung für ein Fahrzeug beschrieben, welche einen zwischen einem Sitzkissen und einer Sitzlehne angeordneten Anker zur Verankerung eines Kindersitzes aufweist. Eine Abdeckung ist in eine eingefahrene und geschlossene Position zwischen dem Sitzkissen und der Sitzlehne bewegbar, in welcher die Abdeckung den Anker bedeckt, und aus dieser eingefahrenen Position in eine ausgefahrene und vollständig geöffnete Position herausbewegbar, in welcher der Anker zum Anordnen eines Kindersitzes zugänglich ist.

In der US 7,093,331 B1 wird ein Gurtschloss beschrieben. Das Gurtschloss umfasst einen Rahmen mit einer Wand, welche eine Partikelauslassöffnung aufweist, und eine Abdeckung mit einer Auslassöffnung, die mit der Partikelauslassöffnung verbunden ist.

In der US 5,588,189 A wird ein Gurtschloss beschrieben, welches eine Basis und zwei darin einzuschiebende Zungen aufweist, die im vollständig eingeschobenen Zustand mit jeweils einer Verriegelungsplatte verriegelt werden. Des Weiteren weist die Basis jeweils ein Sperrglied für die beiden Zungen auf, um das vollständige Einschieben einer der Zungen zu verhindern, bis die jeweils andere Zunge eine vorgegebene Einschubwegstrecke zurückgelegt hat.

In der US 2010/0186201 A1 wird ein Clip zum Befestigen eines ersten Teils an einem zweiten Teil beschrieben.

### Aufgabe

Aufgabe der vorliegenden Erfindung ist es, ein gegenüber dem Stand der Technik verbessertes Abdeckelement für eine Polsterausnehmung eines Fahrzeugsitzes und einen verbesserten Fahrzeugsitz mit einer Polsterausnehmung anzugeben.

### Lösung

Hinsichtlich des Abdeckelements für eine Polsterausnehmung eines Fahrzeugsitzes wird die Aufgabe durch die im Anspruch 1 angegebenen Merkmale gelöst. Hinsichtlich des Fahrzeugsitzes mit einer Polsterausnehmung wird die Aufgabe durch die im Anspruch 7 angegebenen Merkmale gelöst.

Vorteilhafte Weiterbildungen der Erfindung sind Gegenstand der Unteransprüche.

Beim Abdeckelement für eine Polsterausnehmung eines Fahrzeugsitzes, wobei innerhalb der Polsterausnehmung ein fahrzeug- oder fahrzeugsitzfestes Halteteil für eine lösbare, starre Befestigung eines Gegenstandes auf dem Fahrzeugsitz, insbesondere für eine herkömmliche standardisierte Befestigungsvorrichtung eines entnehmbaren Kindersitzes, angeordnet ist, ist das Abdeckelement als am Halteteil erfindungsgemäß entnehmbar anordenbarer Einsatz ausgebildet, welcher ein Fangmittel aufweist, dass ein ungewolltes vollständiges Ablösen des Einsatzes vom Fahrzeugsitz verhindert. Somit ist eine vollständige Ablösung des Einsatzes vom Fahrzeugsitz möglichst vermieden und eine Verletzungsgefahr im Fahrzeug durch sich unkontrolliert bewegende Einsätze ist verringert.

Im Einsatz ist zumindest ein Schlitz ausgeformt, welcher korrespondierend zum Halteteil ausgeformt ist. Dadurch ist der Einsatz auf einfache Weise formschlüssig am Halteteil anordenbar.

Erfindungsgemäß weist der Schlitz des Einsatzes entlang der Einschubrichtung des Halteteils einen hakenförmigen Verlauf auf. Somit ist das Halteteil formschlüssig am Ende des hakenförmigen Schlitzes des Einsatzes gehalten. Darüber hinaus ist im Schlitz ein dem Formschlussmittel in Einschubrichtung vorgelagertes Fangmittel angeordnet. Dieses Fangmittel verhindert eine ungewollte vollständige Ablösung des Einsatzes vom Fahrzeugsitz und/oder dem Halteteil.

Besonders bevorzugt sind im Einsatz Mittel zum Anschluss an das in den Schlitz des Einsatzes einschiebbare und im Schlitz durch ein Formschlussmittel festlegbare Halteteil angeordnet.

Besonders vorteilhafterweise ist das Fangmittel am Ausgang des Schlitzes angeordnet.

Zweckmäßigerweise ist das Fangmittel als in den Schlitz auskragende Federzunge ausgebildet. Diese Ausführung ist hinsichtlich des Aufwandes bei Werkzeug und Materialeinsatz günstig.

Besonders bevorzugt ist die Federzunge in Einschubrichtung des Halteteils geneigt ausgerichtet. Konstruktiv besonders einfach und haltbar ist eine bevorzugte Ausbildung, bei welcher die Federzunge als Ansatz an den Boden eines im Wesentlichen topfartig ausgeformten Einsatzes ausgebildet ist.

In einer vorteilhaften Ausführungsform weist der Einsatz auf seiner dem Schlitz gegenüberliegenden Seite eine in Anlage an ein Fahrzeugsitzpolster bringbare, kragenartige Blende auf. Dies ermöglicht einen bündigen, vorzugsweise stufenlosen Übergang zwischen Fahrzeugsitzpolster und Einsatz.

Beim Fahrzeugsitz mit einer Polsterausnehmung, wobei innerhalb der Polsterausnehmung ein fahrzeug- oder fahrzeugsitzfestes Halteteil für eine lösbare, starre Befestigung eines Gegenstandes auf dem Fahrzeugsitz, insbesondere für eine herkömmliche standardisierte Befestigungsvorrichtung eines entnehmbaren Kindersitzes, angeordnet ist, ist am Halteteil ein erfindungsgemäß entnehmbar anordenbarer Einsatz angeordnet, welcher ein Fangmittel aufweist, dass ein ungewolltes vollständiges Ablösen des Einsatzes vom Fahrzeugsitz und/oder vom Halteteil verhindert. Somit kann ein sich ungewolltes vollständiges Ablösen des Einsatzes vom Halteteil sicher vermieden werden, da ein sich lösender Einsatz vom Fangmittel am Halteteil gehalten wird.

Vorteilhaft ist weiterhin, dass der Einsatz mit einer dem Schlitz gegenüberliegend angeordneten Einführöffnung ausgestattet ist. Bevorzugt ist dabei außerdem, dass die Einführöffnung zum Einführen einer mit dem Halteteil verrastbaren Verriegelung, insbesondere eines Kindersitzes, vorgesehen ist. Dabei ist bevorzugt, dass der Einsatz hülsenartig ausgebildet ist. Insbesondere ist dabei vorteilhaft, dass der Einsatz zwei parallel zueinander orientierte Wandungen aufweist, in welchen sich jeweils kongruente Schlitze erstrecken.

Mittels des am Fahrzeugsitz angeordneten, bereits näher beschriebenen Einsatzes ist in der bereits beschriebenen Art und Weise ein bündiger, vorzugsweise stufenloser Übergang zwischen Fahrzeugsitzpolster und Einsatz und somit eine vollständige Abdeckung der Polsterausnehmung des Fahrzeugsitzpolsters ermöglicht.

### Figuren

Anhand der beigefügten schematischen Figuren wird die Erfindung näher erläutert.

Dabei zeigen:
- Figur 1: schematisch eine Seitenansicht auf einen erfindungsgemäßen Fahrzeugsitz mit einem Kindersitz,
- Figur 2: schematisch eine perspektivische Darstellung eines an einem Halteteil angeordneten Einsatzes in einer Gebrauchsposition und
- Figur 3: schematisch eine perspektivische Darstellung eines an einem Halteteil angeordneten Einsatzes in einer Halteposition.

Einander entsprechende Teile sind in allen Figuren mit den gleichen Bezugszeichen versehen.

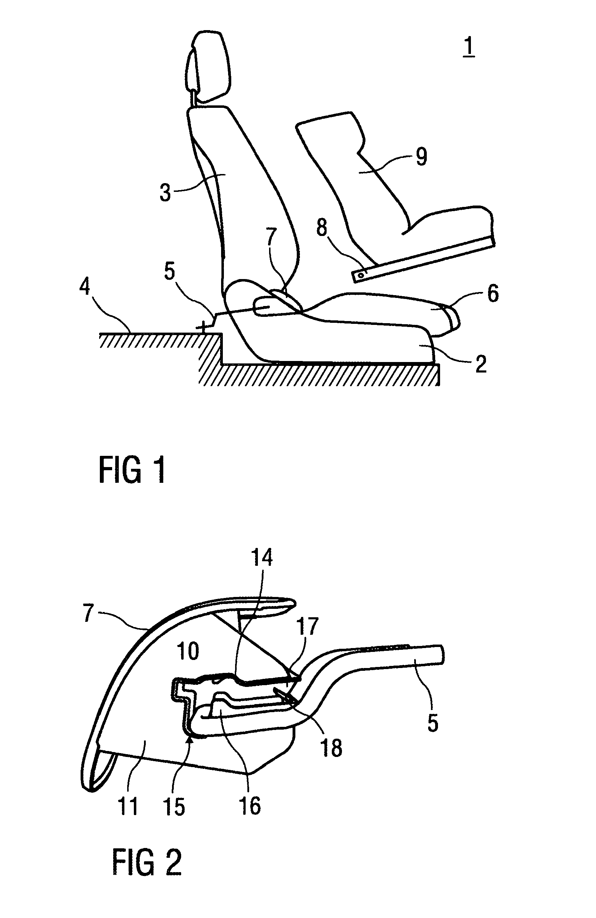

Wie aus Figur 1 ersichtlich, besteht der erfindungsgemäße Fahrzeugsitz 1 aus einem Sitzteil 2 und einer Rückenlehne 3. Am Fahrzeugboden 4 ist hinter dem Fahrzeugsitz 1 ein bügelförmiges Halteteil 5 befestigt, das durch den Übergangsbereich zwischen Sitzteil 2 und Rückenlehne 3 hindurch in Richtung der Sitzfläche 6 geführt und von dort in einen blendenförmigen Einsatz 7 einmündet und formschlüssig mit diesem verbunden ist. In den Einsatz 7 kann von der Sitzfläche 6 her die Verriegelung 8 eines herausnehmbaren Kindersitzes 9 eingeschoben werden, welche zur herkömmlichen standardisierten lösbaren Verrastung mit dem Halteteil 5 vorgesehen ist. Das Halteteil 5 kann alternativ beispielsweise auch an der Struktur des Fahrzeugsitzes 1 angebracht sein.

Wie aus Figur 2 ersichtlich, besteht der Einsatz 7 aus einem hülsenartigen, endseitig im Wesentlichen topfförmig geschlossenen Grundkörper 10 mit zwei parallel zueinander verlaufenden seitlichen Wandungen 11, 11' und einem Boden 12. Am Grundkörper 10 ist eine kragenartige, gekrümmte Blende 13 angeformt, die sich an ihrem seitlich Umfang nach dem Einbau des Einsatzes 7 am Polster der Rückenlehne 3 abstützt. Der Einsatz 7 ist vorzugsweise als Spritzgießteil aus Kunststoff ausgeführt.

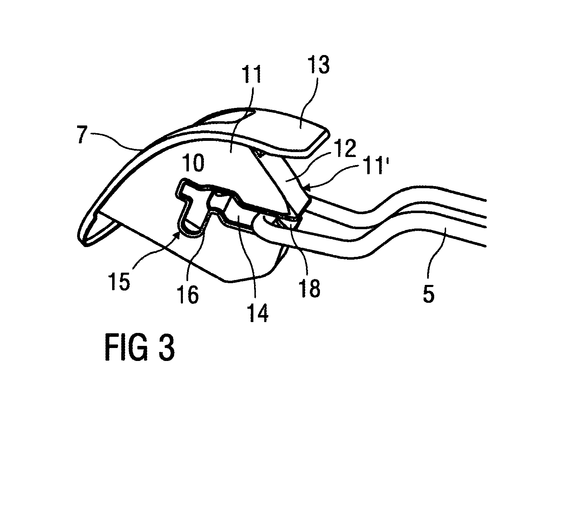

Die Wandungen 11, 11' sind, vom Boden 12 ausgehend, mit einem Schlitz 14 versehen, in welchen das bügelförmige Halteteil 5 einführbar ist. Der Schlitz 14 weist einen hakenförmigen Verlauf mit einer als Formschlussmittel 15 für das Halteteil 5 wirkenden Umlenkung 16 auf. Unter dem Druck des Polsters wird das Halteteil 5 nach der Montage im Formschlussmittel 15 gehalten (Figur 2a). Für den Fall, dass der Polsterdruck nachlässt oder der Formschluss auf andere Weise verloren geht, wird das im Schlitz 14 zurückgleitende Haltemittel 5 von einem Fangmittel 17 gefangen, so dass sich der Einsatz 7 nicht vollständig vom Halteteil 5 lösen kann. Diese Halteposition ist in Figur 3 dargestellt.

Das Fangmittel 17 besteht aus einer am Ausgang des Schlitzes 14 an den Boden 12 angeformten Federzunge 18, welche in Richtung des Formschlussmittels 15 geneigt in den Schlitz 14 auskragt. Der verbleibende Spalt zwischen dem freien Ende der Federzunge 18 und dem Schlitz 14 ist dabei deutlich geringer als der Durchmesser des bügelartigen Halteteils 5, so dass das im Schlitz 14 zurückschnellende Halteteil 5 gefangen wird. Durch die Neigung der Federzunge 18 ist ein Einschieben des Haltemittels 5 in den Schlitz 14 hingegen mit geringem Kraftaufwand möglich. Für eine gewollte Entnahme des Einsatzes 7 muss die Federzunge 18 mit einem Werkzeug bewusst heruntergebogen werden, um einen ausreichenden freien Querschnitt des Schlitzes 14 für ein Herausziehen des Halteteils 5 freizugeben.

### Bezugszeichenliste

- 1: Fahrzeugsitz
- 2: Sitzteil
- 3: Rückenlehne
- 4: Fahrzeugboden
- 5: Halteteil
- 6: Sitzfläche
- 7: Einsatz
- 8: Verriegelung
- 9: Kindersitz
- 10: Grundkörper
- 11, 11': Wandung
- 12: Boden
- 13: Blende
- 14: Schlitz
- 15: Formschlussmittel
- 16: Umlenkung
- 17: Fangmittel
- 18: Federzunge

## Patentansprüche

1. Abdeckelement für eine Polsterausnehmung eines Fahrzeugsitzes (1), wobei innerhalb der Polsterausnehmung ein fahrzeug- oder fahrzeugsitzfestes Halteteil (5) für eine lösbare, starre Befestigung eines Gegenstandes auf dem Fahrzeugsitz (1), insbesondere für die Anbindung eines entnehmbaren Kindersitzes (9), angeordnet ist, wobei das Abdeckelement als Einsatz (7) ausgebildet ist, welcher ein Fangmittel (17) aufweist und wobei im Einsatz (7) zumindest ein Schlitz (14) ausgeformt ist, welcher korrespondierend zum Halteteil (5) ausgeformt ist,
**dadurch gekennzeichnet, dass** der Einsatz (7) am Halteteil (5) entnehmbar anordenbar ist, wobei im Schlitz (14) das Fangmittel (17) einem Formschlussmittel (15) in Einschubrichtung des Halteteils (5) vorgelagert ist und wobei der Schlitz (14) des Einsatzes (7) entlang der Einschubrichtung einen hakenförmigen Verlauf aufweist.

2. Abdeckelement nach Anspruch 1,
**dadurch gekennzeichnet, dass** das Fangmittel (17) am Ausgang des Schlitzes (14) angeordnet ist.

3. Abdeckelement nach einem der vorherigen Ansprüche,
**dadurch gekennzeichnet, dass** das Fangmittel (17) als in den Schlitz (14) auskragende Federzunge (18) ausgebildet ist.

4. Abdeckelement nach Anspruch 3,
**dadurch gekennzeichnet, dass** die Federzunge (18) in Einschubrichtung des Halteteils (5) geneigt ausgerichtet ist.

5. Abdeckelement nach einem der vorherigen Ansprüche,
**dadurch gekennzeichnet, dass** im Einsatz (7) Mittel zum Anschluss an das in den Schlitz des Einsatzes (7) einschiebbare und im Schlitz (14) durch ein Formschlussmittel (15) festlegbare Halteteil (5) angeordnet sind.

6. Abdeckelement nach einem der vorherigen Ansprüche,
**dadurch gekennzeichnet, dass** der Einsatz (7) auf seiner dem Schlitz (14) gegenüberliegenden Seite eine in Anlage an ein Fahrzeugsitzpolster bringbare, kragenartige Blende (13) aufweist.

7. Fahrzeugsitz (1) mit einer Polsterausnehmung, wobei innerhalb der Polsterausnehmung ein fahrzeug- oder fahrzeugsitzfestes Halteteil (5) für eine lösbare, starre Befestigung eines Gegenstandes auf dem Fahrzeugsitz (1), insbesondere für die Anbindung eines entnehmbaren Kindersitzes (9), angeordnet ist, wobei am Halteteil (5) ein Einsatz (7) angeordnet ist, welcher ein Fangmittel (17) aufweist, das ein ungewolltes vollständiges Ablösen des Einsatzes (7) vom Fahrzeugsitz (1) und/oder vom Halteteil (5) verhindert und wobei im Einsatz (7) zumindest ein Schlitz (14) ausgeformt ist, welcher korrespondierend zum Halteteil (5) ausgeformt ist,
**dadurch gekennzeichnet, dass** der Einsatz (7) am Halteteil (5) entnehmbar anordenbar ist, wobei im Schlitz (14) das Fangmittel (17) einem Formschlussmittel (15) in Einschubrichtung des Halteteils (5) vorgelagert ist und wobei der Schlitz (14) des Einsatzes (7) entlang der Einschubrichtung einen hakenförmigen Verlauf aufweist.

8. Fahrzeugsitz (1) nach Anspruch 7,
**dadurch gekennzeichnet, dass** das Fangmittel (17) am Ausgang des Schlitzes (14) angeordnet und als in den Schlitz (14) auskragende Federzunge (18) ausgebildet ist, wobei die Federzunge (18) in Einschubrichtung des Halteteils (5) geneigt ausgerichtet ist.

9. Fahrzeugsitz (1) nach Anspruch 7 oder 8,
**dadurch gekennzeichnet, dass** im Einsatz (7) Mittel zum Anschluss an das in den Schlitz des Einsatzes (7) einschiebbare und im Schlitz (14) durch ein Formschlussmittel (15) festlegbare Halteteil (5) angeordnet sind.

10. Fahrzeugsitz (1) nach einem der Ansprüche 7 bis 9,
**dadurch gekennzeichnet, dass** der Einsatz (7) auf seiner dem Schlitz (14) gegenüberliegenden Seite eine in Anlage an ein Fahrzeugsitzpolster bringbare, kragenartige Blende (13) aufweist, welche korrespondierend zur Polsterausnehmung des Fahrzeugsitzes (1) ausgebildet ist und diese in montiertem Zustand vollständig bedeckt.

## Claims

1. A cover element for a recess in an upholstery of a vehicle seat (1), wherein within the recess in the upholstery a securing part (5), secured to the vehicle or to the vehicle seat, for a releasable rigid attachment of an object on the vehicle seat (1) in particular for the connection of a removable child's seat (9) is arranged, wherein the cover element is designed as an insert (7) comprising an arresting means (17) and whereby at least one slot (14) is shaped in the insert (7), which is shaped corresponding to the securing part (5), **characterized in that** the insert (7) is removably arranged on the securing part (5), wherein the arresting means (17) in the slot (14) is arranged upstream of the securing part (5) with respect to the direction of insertion of the securing part (5) and wherein the slot (14) of the insert (7) comprises a hook-shaped configuration along the direction of insertion.

2. The cover element according to claim 1, **characterized in that** the arresting means (17) is arranged at the exit of the slot (14).

3. The cover element according to any one of the preceding claims, **characterized in that** the arresting means (17) is designed as a spring tongue (18) which projects into the slot (14).

4. The cover element according to claim 3, **characterized in that** the spring tongue (18) is aligned inclined in the direction of insertion of the securing part (5).

5. The cover element according to any one of the preceding claims, **characterized in that** in the insert (7) means for connecting to the securing part (5) are arranged, wherein the securing part (5) can be inserted into the slot of the insert (7) and secured in the slot (14) by means of a positive engagement means (15).

6. The cover element according to any one the preceding claims, **characterized in that** the insert (7) on its side opposite of the slot (14) comprises a collar-shaped cover (13) which can be brought into contact with a vehicle seat padding.

7. A vehicle seat (1) with a recess in the upholstery, wherein inside of the recess of the upholstery, a securing part (5) which is secured to the vehicle or to the vehicle seat for the purpose of a releasable, rigid attachment of an object on the vehicle seat (1), in particular for the attachment of a removable child's seat (9) is arranged, whereby an insert (7) is arranged on the securing part (5), which comprises an arresting means (17) to prevent unintentional complete detachment of the insert (7) from the vehicle seat (1) and/or from the securing part (5) and whereby in the insert (7) at least one slot (14) is formed which is formed corresponding to the securing part (5), **characterized in that** the insert (7) is removably arranged on the securing part (5), wherein the arresting means (17) in the slot (14) is positioned upstream of the securing part (5) with respect to the direction of insertion of the securing part (5) and whereby the slot (14) of the insert (7) comprises a hook-shaped configuration along the direction of insertion.

8. The vehicle seat (1) according to claim 7, **characterized in that** the arresting means (17) is arranged on the exit of the slot (14) and is designed as a spring tongue (18) which projects into the slot (14), wherein the spring tongue (18) is aligned inclined in the direction of insertion of the securing part (5).

9. The vehicle seat (1) according to claim 7 or 8, **characterized in that** in the insert (7) means for connecting to the securing part (5) are arranged, wherein the securing part (5) can be inserted into the slot of the insert (7) and secured in the slot (14) by means of a positive engagement means (15).

10. The vehicle seat (1) according to any one of claims 7 to 9, **characterized in that** the insert (7) has a collar-shaped cover (13) on its side opposite the slot (14), which can be brought into contact on a vehicle seat padding, wherein said collar-shaped cover (13) is shaped corresponding to the recess in the upholstery of the vehicle seal (1) and completely covers it in the assembled state.

## Revendications

1. Élément de recouvrement pour un évidement de coussin d'un siège de véhicule (1), une partie de fixation (5) fixée au siège de véhicule ou au véhicule étant disposée à l'intérieur de l'évidement de coussin pour une fixation rigide et amovible d'un objet sur le siège de véhicule (1), en particulier pour l'assujettissement d'un siège pour enfant pouvant être enlevé (9), l'élément de recouvrement étant réalisé sous forme d'insert (7) qui présente un moyen d'accrochage (17) et au moins une fente (14) étant formée dans l'insert (7), laquelle est formée de manière à correspondre à la partie de fixation (5),
**caractérisé en ce que** l'insert (7) peut être disposé de manière amovible sur la partie de fixation (5), le moyen d'accrochage (17) étant monté dans la fente (14) avant un moyen d'engagement par correspondance de forme (15) dans la direction d'enfoncement de la partie de fixation (5) et la fente (14) de l'insert (7) présentant le long de la direction d'enfoncement une allure en forme de crochet.

2. Élément de recouvrement selon la revendication 1,
**caractérisé en ce que** le moyen d'accrochage (17) est disposé à la sortie de la fente (14).

3. Élément de recouvrement selon l'une quelconque des revendications précédentes, **caractérisé en ce que** le moyen d'accrochage (17) est réalisé sous forme de langue à ressort (18) faisant saillie dans la fente (14).

4. Élément de recouvrement selon la revendication 3,
**caractérisé en ce que** la langue à ressort (18) est orientée de manière inclinée dans la direction d'enfoncement de la partie de fixation (5).

5. Élément de recouvrement selon l'une quelconque des revendications précédentes,
**caractérisé en ce que** des moyens pour le raccordement à la partie de fixation (5) pouvant être enfoncée dans la fente de l'insert (7) et pouvant être fixée dans la fente (14) par un moyen d'engagement par correspondance de forme (15) sont disposés dans l'insert (7).

6. Élément de recouvrement selon l'une quelconque des revendications précédentes,
**caractérisé en ce que** l'insert (7) présente, sur son côté opposé à la fente (14), un bandeau en forme de collet (13) pouvant être appliqué contre un rembourrage de siège du véhicule.

7. Siège de véhicule (1) comprenant un évidement de coussin, dans lequel, à l'intérieur de l'évidement de coussin, est disposée une partie de fixation (5) fixée au siège de véhicule ou au véhicule pour une fixation rigide et amovible d'un objet sur le siège de véhicule (1), en particulier pour fassujettissement d'un siège pour enfant pouvant être enlevé (9), un insert (7) étant disposé sur la partie de fixation (5), lequel présente un moyen d'accrochage (17) qui empêche un enlèvement complet indésirable de l'insert (7) du siège de véhicule (1) et/ou de la partie de fixation (5) et dans lequel au moins une fente (14) est formée dans l'insert (7), laquelle est formée de manière à correspondre à la partie de fixation (5), **caractérisé en ce que** l'insert (7) peut être disposé de manière amovible sur la partie de fixation (5), le moyen d'accrochage (17) étant monté dans la fente (14) avant un moyen d'engagement par correspondance de forme (15) dans la direction d'enfoncement de la partie de fixation (5) et la fente (14) de l'insert (7) présentant le long de la direction d'enfoncement une allure en forme de crochet.

8. Siège de véhicule (1) selon la revendication 7,
**caractérisé en ce que** le moyen d'accrochage (17) est disposé à la sortie de la fente (14) et est réalisé sous forme de langue à ressort (18) faisant saillie dans la fente (14), la langue à ressort (18) étant orientée de manière inclinée dans la direction d'enfoncement de la partie de fixation (5).

9. Siège de véhicule (1) selon la revendication 7 ou 8,
**caractérisé en ce que** des moyens pour le raccordement à la partie de fixation (5) pouvant être enfoncée dans la fente de l'insert (7) et pouvant être fixée dans la fente (14) par un moyen d'engagement par correspondance de forme (15) sont disposés dans l'insert (7).

10. Siège de véhicule (1) selon l'une quelconque des revendications 7 à 9, **caractérisé en ce que** l'insert (7) présente, sur son côté opposé à la fente (14), un bandeau en forme de collet (13) pouvant être appliqué contre un rembourrage de siège du véhicule, lequel est réalisé de manière à correspondre à l'évidement de coussin du siège de véhicule (1) et recouvre complètement celui-ci dans l'état monté.
